# EUROPEAN PATENT SPECIFICATION

(11) **EP 1 772 472 B1**
(45) Date of publication and mention of the grant of the patent: **11.11.2009**
(21) Application number: 05767161.2
(22) Date of filing: 27.07.2005
(51) Int. Cl.: C08F 283/01, B32B 27/36

(54) **ACTINIC RADIATION-CURABLE RESIN COMPOSITION FOR SHAPING, SHAPING SHEET, AND SHAPED PRODUCT**
MIT AKTINISCHER STRAHLUNG HÄRTBARE HARZZUSAMMENSETZUNG FÜR DIE FORMGEBUNG, FORMGEBUNGSFLÄCHENGEBILDE UND FORMTEIL
COMPOSITION DE RESINE ACTINIQUE POUVANT ETRE VULCANISEE PAR RAYONNEMENTS EN VUE D'UNE MISE EN FORME, FEUILLE DE MISE EN FORME ET PRODUIT MIS EN FORME

(30) Priority: 29.07.2004 JP 2004221688
(43) Date of publication of application: 11.04.2007
(73) Proprietor: DIC Corporation, Tokyo (JP)
(72) Inventor: TOKUDA, Hiroyuki, DIC Corporation, Ichihara-shi, Chiba 290-8585 (JP); KOBAYASHI, Nobuo, DIC Corporation, Ichihara-shi, Chiba 290-8585 (JP); MOTOMURA, Masatoshi, DIC Corporation, Ichihara-shi, Chiba 290-8585 (JP); TERADA, Hiroyuki, DIC Corporation, Ichihara-shi, Chiba 290-8585 (JP); SHOUMURA, Kenji, DIC Corporation, Ichihara-shi, Chiba 290-8585 (JP); KONNO, Hidetoshi, DIC Corporation, Ichihara-shi, Chiba 290-8585 (JP)
(74) Representative: Albrecht, Thomas
(86) International application number: PCT/JP2005/013720
(87) International publication number: WO 2006/011506

(56) References cited:
- EP-A- 0 926 188
- EP-A- 0 982 327
- JP-A- 5 001 123
- JP-A- 10 067 865
- JP-A- 2002 012 640
- JP-A- 2002 241 618
- US-A- 6 037 385
- US-B1- 6 225 380
- DATABASE WPI Week 199533 Thomson Scientific, London, GB; AN 1995-252404 XP002494794 & JP 07 157645 A (DAINIPPON INK & CHEM INC) 20 June 1995 (1995-06-20)

## Description

### TECHNICAL FIELD

The present invention relates to a radiation-curable resin composition for shape-replication which can be preferably used for the production of a shape-replicated material such as an optical lens, a projection screen, or an embossed sheet for building and decorative material. Also, the present invention relates to a sheet for shape-replication and a shape-replicated material made from the above sheet.

### BACKGROUND ART

Known examples of a production method of an optical sheet used for an optical lens, a projection screen, and the like include an injection molding process, an extrusion molding process and a press molding process. However, in these production methods, there were problems in that it was difficult to mold a sheet to a large size and that numerous molds were needed for mass production.

Therefore, a production method is known which uses a radiation-curable resin composition such as an ultraviolet-curable resin and a mold such as a cylindrical mold for a lens so as to continuously form a lens on one or both sides of a sheet-type substrate. As a resin composition used in this production method, a radiation-curable resin composition has been proposed, which includes a thermoplastic polymer, a monomer containing one or more unsaturated double bonds in a molecule, and a photoinitiator (for example, see patent reference 1.).

However, in the radiation-curable resin compositions disclosed in patent reference 1, one kind of an acrylic resin such as poly(ethyl methacrylate) is used as a thermoplastic polymer in order to obtain a shape-replicated material such as an optical lens with a favorable mechanical property. As a result, in the case of dissolving the composition in a solvent to make a uniform solution, flow-casting this solution on the sheet-type substrate, and then removing the solvent by evaporation to laminate the composition on the sheet-type substrate, there is a problem that it is easy to foam due to vaporized solvent so that it is difficult to obtain a uniform coating film.
Even if the forming due to vaporized solvent could be preventable during the lamination on the sheet-type substrate, the aforementioned radiation-curable resin composition has a high viscosity during shape-replicating by using a cylindrical mold. Moreover, even when the composition is heated so as to shape-replicate it at a high temperature, in the temperature range in which a sheet-type resin substrate is not deformed due to heat, the viscosity reduction is small in the radiation-curable resin composition produced by using an acrylic resin such as poly(ethyl methacrylate) as a thermoplastic polymer. Therefore, it is difficult to realize an improvement in the shape-replicating property, and the shape on the cylindrical shape cannot be precisely replicated.
When an acrylic resin with a low molecular weight is used as a thermoplastic polymer in order to prevent these problems, it becomes easy to prevent foaming, and the viscosity reduction due to heating is appropriately increased. Therefore, it is possible to obtain a radiation-curable resin composition with an excellent shape-replicating property. However, there are problems in that the resulting cured material becomes brittle and that the cured material has a poor mechanical property. Then, it is difficult to obtain a radiation-curable resin composition with a favorable balance of a shape-replicating property and a mechanical property of a cured material.

[Patent reference 1] Japanese Unexamined Patent Application, First Publication No. Hei 7-128503 (pages 2 to 5)

Also, known examples of a production method of a resin complex which is suitable as a protective film or a coating material include a production method of a resin complex including a first irradiation step of irradiating a shape-replicated material of a radiation-curable composition with radiation, in which a radiation-polymerizable compound (A) and a chain polymer (B) are uniformly mixed, so as to change the shape-replicated material into a semi-cured material in transparent and solid states, without flow ability; and the second irradiation step of further irradiating the semi-cured material with radiation at a temperature which is higher than during the irradiation in the first irradiation step and higher than a glass transition temperature of the semi-cured material (for example, see patent reference 2).

As an example of a radiation-curable composition which is preferably used in the case of obtaining a shape-replicated material, the patent reference 2 discloses a composition including a polyester-based polymer as a chain polymer (B). Specifically, Examples of patent reference 2 disclose a radiation-curable resin composition including a polyarylate-based polymer as a chain polymer (B). However, a radiation-curable composition, which is described to be preferable in patent reference 2, has problems in that it is difficult to mix a radiation-polymerizable compound (A) and a chain polymer (B) and that a shape-replicating property is not sufficient. Because of poor solubility to solvents, there is a problem that it is necessary to use a solvent with strong solubility and a strong influence on the human body and environment, for example a halogenated hydrocarbon such as methylene chloride.

[Patent reference 2] Japanese Unexamined Patent Application, First Publication No. 2002-200623 (pages 2 and 17)

### DISCLOSURE OF INVENTION

Therefore, an object to be achieved by the present invention is to provide a radiation-curable resin composition for sheet for shape-replication with excellent balance of a shape-replicating property and a mechanical property of a cured material; a sheet for shape-replication in which this radiation-curable resin composition for shape-replication is laminated on one side or both sides of a sheet-type resin substrate; and a shape-replicated material produced by shape-replicating the above sheet and then curing it with irradiation.

The present inventors have intensively researched a solution to the above objects, and found the following knowledge (1) to (5).
(1) In a radiation-curable resin which is described to be preferable in patent reference 2, polyarylate used as a chain polymer (B) has a large number average molecular weight of about 16,000, which is one of the reasons the shape-replicating property and solubility to solvents are not sufficient.

(2) As for a radiation-curable resin composition including a polyester resin and a polymerizable vinyl compound, wherein a temperature, at which a complex viscosity (η*) of the components excluding any solvent at a frequency of 1 Hz is 1x10⁴ dPa·s, is 30°C or higher, the thickness change of the resin layer, which is made of this radiation-curable resin composition for shape-replication laminated on a sheet-type resin substrate, due to the flow hardly occurs before shape-replicating step.

(3) As for a radiation-curable resin composition including a polyester resin and a polymerizable vinyl compound wherein a temperature, at which a complex viscosity (η*) at a frequency of 1 Hz is 1x10⁶ dPa·s, is 100°C or lower, when this radiation-curable resin composition for shape-replication is laminated by heating and melting on a sheet-type resin substrate, this heating requires relatively lower temperature, for example 40°C to 110°C. At this heating temperature, a polymerizable vinyl compound in the composition is hardly gelated and can be laminated uniformly.

(4) By using a polyester resin whose number average molecular weight is 1,000 to 8,000, it is possible to easily obtain a radiation-curable resin composition with the aforementioned characteristics (2) and (3), i.e. a resin composition wherein a temperature, at which a complex viscosity (η*) of the composition excluding any solvent components at a frequency of 1 Hz is 1x10⁴ dPa·s, is 30°C or higher, and a temperature, at which a complex viscosity (η*) at a frequency of 1 Hz is 1x10⁶ dPa·s, is 100°C or lower.

(5) A mechanical property is excellent in a radiation-curable resin composition including a polyester resin (R) whose number average molecular weight (Mn) is 1,000 to 8,000; and a polymerizable vinyl compound (V), a temperature (T4), at which a complex viscosity (η*) of the components excluding any solvent at a frequency of 1 Hz is 1x10⁴ dPa·s, is 30°C or higher, and a temperature (T6), at which a complex viscosity (η*) at a frequency of 1 Hz is 1x10⁶ dPa·s, is 100°C or lower.
In addition, there is the case where the composition can be flow-cast on a sheet-type resin substrate by appropriately heating it even without any solvent. In the case of preparing a solution using a solvent, it is possible to dissolve the composition without using a solvent with strong solubility. Since the above case requires a small amount of a solvent, foams hardly occur while removing the solvent by evaporation after the solution has been flow-cast on a sheet-type resin substrate. Also, since the viscosity reduction due to heating within the temperature range, in which a sheet-type resin substrate does not come under the influence of deformation by heating, is appropriately large, it is easy to improve a shape-replicating property (i.e. characteristics of precisely replicating even a fine shape of a mold and keeping the shape) due to heating, and balance of a shape-replicating property and a mechanical property of a cured material is favorable.
The present invention was completed on the basis of the aforementioned knowledge.

In other words, the present invention provides a radiation-curable resin composition for shape-replication including a polyester resin (R) whose number average molecular weight (Mn) is 1,000 to 8,000; and a polymerizable vinyl compound (V), wherein a temperature (T4), at which a complex viscosity (η*) of components excluding any solvent at a frequency of 1 Hz is 1x10⁴ dPa·s, is 30°C or higher, and a temperature (T6), at which a complex viscosity (η*) at a frequency of 1 Hz is 1x10⁶ dPa·s, is 100°C or lower.

Also, the present invention provides a sheet for shape-replication wherein this radiation-curable resin composition for shape-replication is laminated on one side or both sides of a sheet-type resin substrate; and a shape-replicated material produced by shape-replicating the above sheet and curing it with irradiation.
In the present specification, "acrylic acid" and "methacrylic acid" are collectively referred to as "(meth)acrylic acid", and "acrylate" and "methacrylate" are collectively referred to as "(meth)acrylate".

A radiation-curable resin composition for shape-replication of the present invention is excellent in a mechanical property of a cured material. In addition, there is the case where it is possible to flow-cast the composition on a sheet-type resin substrate by appropriately heating it without any solvent. In the case of preparing a solution using a solvent, it is possible to dissolve the composition without using a solvent with a strong solubility. Also, since the above case requires a small amount of solvent, foams hardly occur while removing the solvent by evaporation after the solution has been flow-cast on a sheet-shape-replicated resin material. In addition, it is easy to improve a shape-replicating property by heating, and the balance of a shape-replicating property and a mechanical property of a cured material is favorable. Also, it is easy to obtain a cured material which is excellent in a mechanical property and on which a shape of a mold such as a lens pattern is precisely replicated.

### BEST MODE FOR CARRYING OUT THE INVENTION

Hereinafter, the present invention is described in detail.
In a polyester resin (R) used in the present invention, it is essential that a number average molecular weight (Mn) is 1,000 to 8,000. In particular, a number average molecular weight (Mn) is preferably 1,500 to 5,000 because the viscosity reduction due to heating within the temperature range, in which a sheet-type resin substrate does not come under the influence of deformation by heating, for example 30°C to 100°C, is appropriately large, it is possible to obtain a radiation-curable resin composition for shape-replication in which the balance of a shape-replicating property and a mechanical property of a cured material is more favorable, and solubility to solvents is favorable. Furthermore, in a polyester resin (R) used in the present invention, a softening point is preferably 80°C to 150°C on the basis of a ball and ring method.
A polyester resin whose number average molecular weight (Mn) is lower than 1,000 is not preferable because a mechanical property of a cured material becomes deteriorated so that the cured material becomes brittle. Also, a polyester resin whose number average molecular weight (Mn) is higher than 8,000 is not preferable because this polyester resin is difficult to be mixed with other components such as an unsaturated double bond-containing monomer (M), and a shape-replicating property becomes deteriorated. Also, a polyester resin whose number average molecular weight (Mn) is lower than 1,000 or higher than 8,000 is not preferable because it is difficult to control the components of radiation-curable resin composition excluding any solvent to have a temperature (T4) of 30°C or higher at which a complex viscosity (η*) at a frequency of 1 Hz is 1x10⁴ dPa·s and a temperature (T6) of 100°C or lower at which a complex viscosity (η*) at a frequency of 1 Hz is 1x10⁶ dPa·s.

It is preferable that the aforementioned polyester resin (R) contain an unsaturated double bond because a sufficient crosslink density can be obtained after curing on the exposure to radiation. Also, the branched polyester resin (R) can be used.

Examples of the aforementioned polyester resin (R) include a resin obtained by using a polycarboxylic acid component and a polyol component as essential raw materials.

There is no particular limitation to the aforementioned polycarboxylic acid component, and examples thereof include a dicarboxylic acid or an anhydride thereof such as succinic acid, adipic acid, sebacic acid, azelaic acid, dodecenyl succinic acid, n-dodecyl succinic acid, malonic acid, maleic acid, fumaric acid, citraconic acid, itaconic acid, glutaconic acid, cyclohexanedicarboxylic acid, orthophthalic acid, isophthalic acid, or terephthalic acid; and a carboxylic acid containing tri- or polyfunctional groups or an anhydride thereof such as trimellitic acid, trimethinic acid, or pyromellitic acid. In addition, lower alkyl carboxylates can be used as a polycarboxylic acid component. Herein, the lower alkyl group means an alkyl group containing 1 or more and 4 or less carbon atoms. These polycarboxylic acid components can be used alone or in a combination of two or more. Among them, it is more preferable that maleic acid and/or fumaric acid be used as a part or all of polycarboxylic acid components because an unsaturated double bond can be introduced in the resulting polyester resin, and it is possible to obtain a polyester resin excellent in solubility with a polymerizable vinyl compound (V). In addition, a monocarboxylic acid such as benzoic acid, p-toluic acid, p-tert-butyl benzoic acid can be used together according to need.

There is no particular limitation to the aforementioned polyol component, and examples thereof include a divalent alcohol such as an ethylene glycol, triethylene glycol, 1,2-propylene glycol, 1,3-propylene glycol, 1,4-butanediol, 1,3-butanediol, 1,4-butenediol, 1,5-pentanediol, 1,6-hexanediol, hydrogenated bisphenol A, or bisphenols-alkylene oxide adducts; tri- or polyvalent alcohols such as a glycerine, trimethylolethane, trimethylolpropane, trishydroxyethyl isocyanurate, or pentaerythritol. These polyol components can be used alone or in a combination of two or more.
Among them, it is more preferable that bisphenols and/or their alkylene oxide adducts be used as a part or all of polyol components because it is easy to obtain a radiation-curable resin composition in which the components excluding any solvent are easily controlled to have a temperature (T4) of 30°C or higher at which a complex viscosity (η*) at a frequency of 1 Hz is 1x10⁴ dPa·s and a temperature (T6) of 100°C or lower at which a complex viscosity (η*) at a frequency of 1 Hz is 1x10⁶ dPa·s.

Therefore, it is particularly preferable that the polyester resin (R) be obtained by using maleic acid and/or fumaric acid as a part or all of polycarboxylic acid components and bisphenols and/or their alkylene oxide adducts as a part or all of polyol components.

Herein, when a polyester resin is produced by using the polycarboxylic acid components and the polyol components, an esterification catalyst such as dibutyltin oxide can be used appropriately.

There is no particular limitation to a polymerizable vinyl compound (V) used in the present invention, and examples thereof include any kinds of a polymerizable vinyl monomer and a polymerizable vinyl oligomer, for example a (meth)acrylic monomer such as β-hydroxyethyl (meth)acrylate, β-hydroxypropyl (meth)acrylate, glycidyl (meth)acrylate, β-hydroxyethyl (meth)acryloyl phosphate, dimethylaminoethyl (meth)acrylate, diethylaminoethyl (meth)acrylate, ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, trimethylolpropane di(meth)acrylate, trimethylolpropane tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, or tris[2-(meth)acryloyloxyethyl] isocyanurate; or a (meth)acrylic oligomer such as polyester (meth)acrylate, bisphenol-type epoxy (meth)acrylate, novolak-type epoxy (meth)acrylate, or urethane (meth)acrylate. Each of these polymerizable vinyl monomer and polymerizable vinyl oligomer can be used alone, while it is usually preferable to use a polymerizable vinyl monomer alone or to use polymerizable vinyl monomers together with polymerizable vinyl oligomers. Among them, it is particularly preferable to use polymerizable vinyl monomers together with polymerizable vinyl oligomers. In addition, it is preferable that a polymerizable vinyl oligomer have a number average molecular weight which is more than 200 and less than 2,000, and less than a number average molecular weight (Mn) of a polyester resin (R).

In these polymerizable vinyl compounds (V), because a sufficient crosslink density can be obtained after curing on exposure to radiation, it is preferable to use the following (meth)acrylic compounds containing 2 to 6 unsaturated double bonds in a molecule as an essential component: ethylene glycol di(meth)acrylate, diethylene glycol di(meth)acrylate, triethylene glycol di(meth)acrylate, propylene glycol di(meth)acrylate, dipropylene glycol di(meth)acrylate, tripropylene glycol di(meth)acrylate, trimethylolpropane di(meth)acrylate, trimethylolpropane tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, and tris[2-(meth)acryloyloxyethyl] isocyanurate.

A radiation-curable resin composition for shape-replication of the present invention is required to include the aforementioned polyester resin (R); and the aforementioned polymerizable vinyl compound (V), wherein a temperature (T4), at which a complex viscosity (η*) of the components excluding any solvent at a frequency of 1 Hz is 1x10⁴ dPa·s, is 30°C or higher, and a temperature (T6), at which a complex viscosity (η*) at a frequency of 1 Hz is 1x10⁶ dPa·s, is 100°C or lower. When the aforementioned temperature (T4) is lower than 30°C, the thickness change of the resin layer, which is made of radiation-curable resin composition for shape-replication laminated on a sheet-type resin substrate, due to the flow easily occurs before a shape-replicating step; therefore, this composition is not preferable. When the aforementioned temperature (T6) is higher than 100°C, it is required to increase a heating temperature when the radiation-curable resin composition for shape-replication is laminated by heating and melting on a sheet-type resin substrate. As a result, a polymerizable vinyl compound in the radiation-curable resin composition for shape-replication is gelated, and so it becomes difficult to be uniformly laminated. In addition, it is required to increase a heating temperature when the radiation-curable resin composition for shape-replication is shape-replicated. As a result, there is a possibility of a problem occurring in that thermal deformation occurs in a sheet-type resin substrate such as poly(ethylene terephthalate) whose softening point is low; therefore, this composition is not preferable.

In a radiation-curable resin composition for shape-replication in the present invention, the temperature (T4) is preferably 40°C or higher and more preferably 55°C or higher. Also, the temperature (T6) is preferably 80°C or lower and more preferably 60°C or lower. Among them, a radiation-curable resin composition for shape-replication having the temperature (T4) of 40°C or higher and the temperature (T6) of 80°C or lower is preferable, and a radiation-curable resin composition for shape-replication having the temperature (T4) of 55°C or higher and the temperature (T6) of 60°C or lower is more preferable.

Examples of a radiation-curable resin composition for shape-replication of the present invention include a composition including the aforementioned polyester resin (R) and the aforementioned polymerizable vinyl compound (V) as essential components and further including a resin other than the polyester resin (R), a photoinitiator, other additives, a solvent, and so on according to need.

In the case where the viscosity change of a radiation-curable resin composition for shape-replication is too sensitive for the temperature, a small change of temperature during a shape-replicating step has an unignorable influence on a shape-replicating property. Therefore, it is preferable that a radiation-curable resin composition for shape-replication of the present invention have appropriate temperature sensitivity. Specifically, the temperature difference (T4 - T6) between the temperature (T4) and the temperature (T6) is preferably 20°C or higher and more preferably 20°C to 50°C. In this case, a temperature (T5), at which the complex viscosities (η*) at a frequency of 1 Hz are 1x10⁵ dPa·s, is preferably 30°C to 100°C and more preferably 40°C to 80°C.

The polyester resin (R) and the polymerizable vinyl compound (V) can be mixed in any ratio as long as the temperature (T4), at which a complex viscosity (η*) of the components of radiation-curable resin composition for shape-replication excluding any solvent to be obtained at a frequency of 1 Hz is 1x10⁴ dPa·s, is 30°C or higher, and a temperature (T6), at which a complex viscosity (η*) at a frequency of 1 Hz is 1x10⁶ dPa·s, is 100°C or lower. In particular, the weight ratio (R/V) is preferably within a range of 40/60 to 90/10 because it is easy to obtain a radiation-curable resin composition for shape-replication in which the temperature difference (the temperature (T4) - the temperature (T6)) is 20°C or higher, and the temperature (T5) is 30°C to 100°C. Also, a combination of the polyester resin (R) and the polymerizable vinyl compound (V) can be selected arbitrarily, but the combination in which a composition can have transparency is preferable in the case where the use of a resulting shape-replicated material is optical articles.

In the present invention, a complex viscosity (η*) of the components excluding any solvent in a radiation-curable resin composition for shape-replication at a frequency of 1 Hz is 1x10⁴ dPa·s is obtained by measuring it using rheometer RS500 produced by HAAKE Co., Ltd. under the conditions of a measurement frequency: 6.28 rad/sec. (1 Hz), a measurement starting temperature: 25°C, a measurement completion temperature: 150°C, a rate of temperature increase: 2 °C/min. Also, the temperatures (T4), (T5), and (T6) can be obtained by the charts of the measurement results of temperature changes of the complex viscosities (η*).

As described above, a radiation-curable resin composition for shape-replication of the present invention can include resins other than the polyester resin (R), a photoinitiator, or other additives. Examples of resins other than the polyester resin (R) include an acrylic resin, a urethane resin, an epoxy resin, and a polycarbonate. These other resins can be used usually at 100 parts by weight or less and preferably at 50 parts by weight or less on the basis of 100 parts by weight of the polyester resin (R).

Also, examples of the photoinitiator include
1-[4-(2-hydroxyethoxy)phenyl]-2-hydroxy-2-methyl-1-propan-1-one,
1-hydroxy-cyclohexyl-phenyl-ketone, 2,2-dimethoxy-1,2-diphenylethan-1-one,
2,4,6-trimethylbenzoyldiphenylphosphine oxide,
2-benzyl-2-dimethylamino-1-(4-morpholinophenyl)butanone-1,
2-hydroxy-2-methyl-1-phenyl-propan-1-one,
2-methyl-1-[4-(methylthio)phenyl]-2-morpholinopropan-1-one, benzoin ethyl ether, bis(2,4,6-trimethylbenzoyl)-phenylphosphine oxide, isopropyl thioxanthone, methyl o-benzoylbenzoate, [4-(methylphenylthio)phenyl] phenyl methanone, benzophenone, and p-dimethylaminobenzoic acid isoamylethyl ester.
Among them, preferable examples of the photoinitiator include
1-[4-(2-hydroxyethoxy)phenyl]-2-hydroxy-2-methyl-1-propan-1-one,
1-hydroxy-cyclohexyl-phenyl-ketone, 2,2-dimethoxy-1,2-diphenylethan-1-one,
2,4,6-trimethylbenzoyldiphenylphosphine oxide,
2-hydroxy-2-methyl-1-phenyl-propan-1-one, and
bis(2,4,6-trimethylbenzoyl)-phenylphosphine oxide.
The photoinitiator can be used usually at 10 parts by weight or less and preferably at 0.1 to 6 parts by weight on the basis of 100 parts by weight of the sum of the polyester resin (R) and the polymerizable vinyl compound (V) (or the resin component which is curable with irradiation).

Furthermore, examples of the other additives include a mold-releasing agent which improves a mold-releasing property in a mold-releasing step, a colorant such as a pigment or a dye, an antioxidant, a photodispersing agent, and a thermal polymerization inhibitor.

Among these other additives, it is preferable to blend a thermal polymerization inhibitor for the purpose of maintaining thermal polymerization inhibition and storage stability during the production of a radiation-curable resin composition for shape-replication of the present invention. There is no particular limitation to the thermal polymerization inhibitor, and representative examples thereof include hydroquinone, hydroquinone monomethyl ether, tert-butylcatechol, p-benzoquinone, and phenothiazine. The thermal polymerization inhibitor is used usually at 2 parts by weight or less and preferably at 0.05 to 1 parts by weight on the basis of 100 parts by weight of the sum of the polyester resin (R) and the polymerizable vinyl compound (V) (or the resin component which is cured by heating).

There are various methods to be used for the production of a shape-replicated material by using a radiation-curable resin composition for shape-replication of the present invention. Examples of the production method are as follows.

Method 1 includes heating each of a sheet for shape-replication obtained by the method described below and a flat or roll-shape-replicated mold on which a shape-replicating pattern is formed; touching the sheet for shape-replication to the mold such that the radiation-curable resin composition for shape-replication layer of the sheet for shape-replication is on the side of the mold, followed by shape-replicating by pressurizing; and then curing the radiation-curable resin composition with irradiation followed by mold-releasing.

Method 2 includes heating each of a shape-replicated sheet obtained by the method described below and a flat or roll-shape-replicated mold on which a shape-replicating pattern is formed; touching the shape-replicated sheet to the mold such that the radiation-curable resin composition for shape-replication layer of the shape-replicated sheet is on the side of the mold, followed by shape-replicating by heating and mold-releasing; and then curing the radiation-curable resin composition on exposure to radiation.

In method 2, it is possible to improve a mold-releasing property by cooling after shape-replicating with pressing, which follows touching the shape-replicated sheet to the mold.

Herein, a radiation-curable resin composition for shape-replication of the present invention can include a mold-releasing agent. Due to a mold-releasing agent included in the composition, a mold-releasing property can be improved without cooling after shape-replicating with pressing which follows touching the shape-replicated sheet to the mold in method 2.

Examples of the mold-releasing agent include solid waxes such as polyethylene wax, amide wax, Teflon (registered trademark) powder; a fluorine-based or phosphate-based surfactant; a fluorine-containing resin; and a silicone compound. Among them, a silicone compound is preferable.

Preferable examples of the silicone compound include a polyether-modified and/or polyester-modified silicone compounds such as a polyether-modified silicone compound, a polyester-modified silicone compound, or a polyether-modified and polyester-modified silicone compound.

Examples of the polyether-modified and/or polyester-modified silicone compounds include a compound in which a polyether chain and/or a polyester chain are introduced at ends and/or side chains of polysiloxane, and also includes a co-modified silicon compound in which an organic group other than polyethers and polyesters, such as an epoxy group or an amino group, is introduced together into polysiloxane. Also, it is preferable for the polyether-modified and/or polyether-modified silicone compounds to include a (meth)acryloyl group in a molecule because a sufficient crosslink density can be obtained after curing on exposure to radiation.

Examples of the polyether-modified silicone compound include KF-351, KF-352, KF-353, KF-354L, KF-355A, KF-615A, KF-945, KF-618, KF-6011, KF-6015, KF-6004, X-22-4272, X-22-4952, X-22-6266, X-22-3667, X-22-4741, X-22-3939A, X-22-3908A (these are produced by Shin-Etsu Chemical Co., Ltd.); BYK-300, BYK-302, BYK-306, BYK-310, BYK-320, BYK-325, BYK-330, BYK-331, BYK-333, BYK-337, BYK-344, BYK-375, BYK-377, BYK-UV3510, BYK-301, BYK-307, BYK-325, BYK-341, BYK-345, BYK-346, BYK-347, BYK-348 (these are produced by BYK Chemie Co., Ltd.); SILWET L-77, SILWET L-720, SILWET L-7001, SILWET L-7002, SILWET L-7604, SILWET Y-7006, SILWET FZ-2101, SILWET FZ-2104, FZ-2105, SILWET FZ-2110, SILWET FZ-2118, SILWET FZ-2120, SILWET FZ-2122, SILWET FZ-2123, SILWET FZ-2130, SILWET FZ-2154, SILWET FZ-2161, SILWET FZ-2162, SILWET FZ-2163, SILWET FZ-2164, SILWET FZ-2166, SILWET FZ-2191, SILWET FZ-2203, SILWET FZ-2207, SILWET 2208, SILWET FZ-3736, SILWET Y-7499, SILWET FZ-3789, SF8472, BY16-004, SF8428, SH3771, SH3746, BY16-036, SH3749, SH3748, SH8400, SF8410 (these are produced by Toray Dow Corning Silicone Co., Ltd.); and L032, L051, L066 (these are produced by Asahi Chemical Industry Wacker silicone Co., Ltd.). Also, examples of this compound including at least one (meth)acryloyl group in a molecule include BYK-UV3500, BYK-UV3570, BYK-UV3530 (these are produced by BYK Chemie Co., Ltd.).

Also, examples of the polyester-modified silicone compound include BYK-310, BYK-315, BYK-370 (these are produced by BYK Chemie Co., Ltd.). Also, examples of this compound including at least one (meth)acryloyl group in a molecule include BYK-UV3570 (these are produced by BYK Chemie Co., Ltd.). These polyether-modified or polyester-modified silicone compounds can be used alone or in a combination of two or more.

The polyether-modified or polyester-modified silicone compound is used within the content range in which transparency preferable for the use in optical articles and the solubility of a radiation-curable resin composition can be maintained. As for the content thereof, the content range in the nonvolatile components of a radiation-curable resin composition is preferably 1 to 15 wt% and more preferably 3 to 10 wt%. This content level is high in comparison with the case of a mold-releasing agent such as a silicone-based compound used in a general cast polymerization. In the case of a radiation-curable resin composition in which a mold-releasing agent is blended so as to increase viscosity of the produced composition such that a shape-replicating property is maintained and that a resin layer is not flowed before or after shape-replicating, a bleed property (the property in which the low-molecular-weight components of a resin ooze out on surface.) becomes poor in comparison with the case of a general cast polymerization. Therefore, the polyether-modified or polyester-modified silicone compound needs to be used in a large amount so as to exert a mold-releasing property under the condition of such a poor bleed property.

In the present invention, a sheet for shape-replication means the article in which the aforementioned radiation-curable resin composition for shape-replication is laminated on one side or both sides of a sheet-type resin substrate. There is no particular limitation to the sheet-type resin substrate used in the sheet for shape-replication, and preferable examples thereof include a sheet-type resin substrate made of a polyester-based resin represented by poly(ethylene terephthalate), a sheet-type resin substrate made of an acrylic resin represented by poly(methyl methacrylate), and a sheet-type resin substrate made of a polycarbonate resin. According to these preferable examples, it is possible to cure a resin layer by irradiation through either side of a sheet when a resin layer, which is obtained by laminating and shape-replicating a radiation-curable resin composition on one side or both sides of these substrates, is irradiated. There is no particular limitation to the thickness of a sheet-type resin substrate, and the thickness can be determined according to purpose. The thickness of a sheet-type resin substrate is preferably 38 to 500 µm, and more preferably 50 to 250 µm. Also, the surface of a sheet-type resin substrate is preferably subjected to an adhesiveness-improving treatment such as a corona discharge treatment, a plasma treatment, or a primer treatment for the purpose of improving adhesiveness between a sheet-type resin substrate and a resin layer.

There is no particular limitation to the thickness of the layer of a radiation-curable resin composition for shape-replication excluding any solvent laminated on one side or both sides of a sheet-type resin substrate, and the thickness can be determined according to purpose. The thickness of a resin layer is usually 10 µm to 1 mm, and preferably 50 to 500 µm, and is preferably 1 to 5 times as much as a maximum depth of a mold.

There is no particular limitation to a method of laminating a radiation-curable resin composition for shape-replication on one side or both sides of a sheet-type resin substrate, and examples thereof include the method including dissolving a radiation-curable resin composition in a solvent such as a toluene, xylene, ethyl acetate, butyl acetate, acetone, methyl ethyl ketone, methyl isobutyl ketone, ethanol, isopropanol according to need so as to prepare a uniform solution; flow-casting this solution on a sheet-type resin substrate by using various coaters; and then removing a solvent by evaporation with a drying oven. Also, examples thereof include the method including heating a uniformly mixed radiation-curable resin composition so as to decrease viscosity followed by applying the composition on a sheet-type resin substrate; and solidifying it by cooling. Among them, the latter method is more preferable because it is difficult to completely remove a solvent especially during a thick film-coating step. Herein, in the case of preparing a solution using a solvent, resin components are dissolved preferably at 40 wt% or more, and more preferably at 50 wt% or more in the equivalent of the film-forming components.

A shape-replicated material can be produced by shape-replicating a sheet for shape-replication of the present invention and then curing it on exposure to radiation. Shape-replicating of a sheet for shape-replication is performed by shape-replicating a layer of a radiation-curable resin composition for shape-replication laminated on one side or both sides of a sheet-type resin substrate. Examples thereof include the method including heating a sheet for shape-replication of the present invention up to the temperature at which a complex viscosity (η*) of a radiation-curable resin composition for shape-replication excluding any solvent at a frequency of 1 Hz is 1x10⁴ to 1x10⁶ dPa·s, preferably the temperature at which a complex viscosity (η*) at a frequency of 1 Hz is about 1x10⁵ dPa·s such as 0.63x10⁵ to 1.58x10⁵ dPa·s; bringing the sheet for shape-replication into contact with a flat shape-replicating mold followed by shape-replicating with pressing; and then curing it on exposure to radiation followed by mold-releasing so as to obtain a shape-replicated material such as an optical lens sheet. Also, examples thereof include the method including heating a sheet for shape-replication in the same way as the aforementioned; performing shape-replicating and mold-releasing by continuous pressing using a roll-shape-replicated shape-replicating mold as described in the aforementioned patent reference 1 and other reference (for example, see Japanese Unexamined Patent Application, First Publication No. Hei 1-159627); and then curing it on exposure to radiation so as to obtain a shape-replicated material such as an optical lens sheet.
Herein, examples of a light source of radiation used for curing include various sources such as a low-pressure or high-pressure mercury-vapor lamp, a metal halide lamp, a xenon lamp, an electrodeless discharge lamp, and a carbon-arc lamp.

### EXAMPLE

The present invention will now be described in detail by way of Examples and Comparative Examples, but the present invention is not limited thereto. In Examples, parts are by mass unless otherwise described.

### (Example 1)

812 parts of bisphenol A-propylene oxide adducts (BAP2 glycol produced by Nippon Nyukazai Co., Ltd.) and 272 parts of fumaric acid were reacted in the presence of 1.1 parts of dibutyl tin oxide at 215°C for 8 hours, thereby obtaining a polyester resin (R1) which has unsaturated double bonds in a molecule, a number average molecular weight (Mn) of 2,300, and a softening point of 100°C.

Herein, a number average molecular weight (Mn) of a polyester resin is a polystyrene equivalent number average molecular weight obtained by the measurement at a flow rate of 0.350 ml/min using a high speed gel permeation chromatography apparatus produced by Tosoh Corporation (HLC-8220GPC) and columns produced by Tosoh Corporation (each one of TSKgel SuperHZ4000, SuperHZ3000, SuperHZ2000, and SuperHZ1000), and tetrahydrofuran as a solvent (hereinafter, the same is applied).

Subsequently, in a separable flask, 65 parts of the obtained polyester resin (R1), 28 parts of urethane acrylate oligomer (UNIDIC V-4260 produced by Dainippon Ink and Chemicals, Inc., number average molecular weight: 1,700, the number of an average unsaturated group: 3), 3 parts of the product of the reaction of dipentaerythritol and acrylic acid (KAYARAD DPHA produced by Nippon Kayaku Co., Ltd., the mixture of dipentaerythritol hexaacrylate (the number of functional group: 6) and dipentaerythritol pentaacrylate (the number of functional group: 5)), and 4 parts of 2,2-dimethoxy-1,2-diphenylethan-1-one (IRGACURE 651 produced by Ciba Specialty Chemicals K.K.) were dissolved in 50 parts of ethyl acetate, and then defoamed by depressurizing, thereby obtaining a uniform radiation-curable resin composition for shape-replication. The temperature (T6), at which a complex viscosity (η*) of the obtained radiation-curable resin composition for shape-replication at a frequency of 1 Hz is 1x10⁶ dPa·s, is 37°C, the temperature (T5), at which a complex viscosity (η*) at a frequency of 1 Hz is 1x10⁵ dPa·s, was 55°C, and the temperature (T4), at which a complex viscosity (η*) of the components excluding any solvent at a frequency of 1 Hz is 1x10⁴ dPa·s, was 72°C. Also, the temperature difference (T4-T6) was 35°C. '

On one side of the poly(ethylene terephthalate) film (TOYOBO ester ® film A4300 produced by TOYOBO Co., Ltd.) with a thickness of 100 µm, the obtained radiation-curable resin composition for shape-replication was applied and dried 3 times by using an applicator, thereby obtaining a sheet for shape-replication (S1) in which the layer of the radiation-curable resin composition for shape-replication with a thickness of 100 µm was laminated on one side of the sheet-type resin substrate.

Each of the obtained sheet for shape-replication (S 1) and a flat mold, in which rectangular grooves with a bottom width of 93 µm, a top width of 103 µm, and a depth of 40 µm were parallel formed at a spacing of 47 µm, was heated up to 55°C, and the sheet for shape-replication was brought into contact with the mold such that the layer of the radiation-curable resin composition for shape-replication was on the side of the mold, and then the sheet for shape-replication was shape-replicated with pressing at a pressure of 98 kPa for 2 seconds. Subsequently, the sheet was separated from the mold after cooling down to 40°C, and irradiated by ultraviolet rays with 1000 mJ/cm² from a UV lamp, thereby obtaining the shape-replicated sheet (Sc1), in which the pattern of the mold was replicated to the radiation-curable resin composition.

The obtained shape-replicated sheet (Sc1) was not damaged during mold-releasing and other treatments and was excellent in a mechanical property. When this shape was measured by using a laser microscope (the ultradeep shape-measuring microscope VK-8510 produced by Keyence Corporation), the flat part width at the top part of rectangular shape corresponding to the bottom part (width: 93 µm) of the rectangular groove was 90 µm or more, and it was confirmed that the shape of the mold was precisely replicated.

### (Example 2)

To a separable flask, 37 parts of the polyester resin (R1) obtained in Example 1, 56 parts of epoxy acrylate oligomer (UNIDIC V-5500 produced by Dainippon Ink and Chemicals, Incorporated, number average molecular weight: 520, the number of an average unsaturated group: 2), 3 parts of KAYARAD DPHA, and 4 parts of IRGACURE 651 were added, stirred and heated at 100°C, and then defoamed by depressurizing, thereby obtaining a uniform radiation-curable resin composition for shape-replication. The temperature (T6), at which a complex viscosity (η*) of the obtained radiation-curable resin composition for shape-replication at a frequency of 1 Hz is 1x10⁶ dPa·s, is 32°C, the temperature (T5), at which a complex viscosity (η*) at a frequency of 1 Hz is 1x10⁵ dPa·s, was 44°C, and the temperature (T4), at which a complex viscosity (η*) of the components excluding any solvent at a frequency of 1 Hz is 1x10⁴ dPa·s, was 60°C. Also, the temperature difference (T4 - T6) was 28°C.

The obtained radiation-curable resin composition for shape-replication, the poly(ethylene terephthalate) film A4300, and an applicator were previously heated up to 95°C. Then, on the hotplate whose temperature was controlled to be 95°C, the radiation-curable resin composition for shape-replication was applied on one side of the poly(ethylene terephthalate) film A4300 by using an applicator, thereby obtaining a sheet for shape-replication (S2) in which the layer of the radiation-curable resin composition for shape-replication with a thickness of 100 µm was laminated on one side of the sheet-type resin substrate.

Each of the obtained sheet for shape-replication (S2) and a flat mold, in which rectangular grooves with a bottom width of 93 µm, a top width of 103 µm, and a depth of 40 µm were parallel formed at a spacing of 47 µm, was heated up to 45°C, the sheet for shape-replication was brought into contact with the mold such that the layer of the radiation-curable resin composition for shape-replication was on the side of the mold, and then the sheet for shape-replication was shape-replicated with pressing at a pressure of 98 kPa for 2 seconds. Subsequently, the sheet was separated from the mold after cooling down to 30°C, and the pattern of the mold was replicated to the radiation-curable resin composition on exposure to ultraviolet rays with 1000 mJ/cm² from a UV lamp, thereby obtaining a shape-replicated sheet (Sc2).

The obtained shape-replicated sheet (Sc2) was not damaged during mold-releasing and other treatments and was excellent in a mechanical property. When the shape was measured by using a laser microscope, the flat part width at the top part of rectangular shape corresponding to the bottom part (width: 93 µm) of the rectangular groove was 90 µm or more, and it was confirmed that the shape of the mold was precisely replicated.

### (Example 3)

To a separable flask, 74 parts of the polyester resin (R1) obtained in Example 1, 19 parts of UNIDIC V-4260, 3 parts of KAYARAD DPHA, 4 parts of IRGACURE 651, and 4 parts of polyether-modified polydimethylsiloxane (SILWET FZ-2164 produced by Toray Dow Corning Silicone Co., Ltd.) were added, stirred and heated at 110°C, and then defoamed by depressurizing, thereby obtaining a uniform radiation-curable resin composition for shape-replication. The temperature (T6), at which a complex viscosity (η*) of the obtained radiation-curable resin composition for shape-replication at a frequency of 1 Hz is 1x10⁶ dPa·s, is 42°C, the temperature (T5), at which a complex viscosity (η*) at a frequency of 1 Hz is 1x10⁵ dPa·s, was 58°C, and the temperature (T4), at which a complex viscosity (η*) of the components excluding any solvent at a frequency of 1 Hz is 1x10⁴ dPa·s, was 74°C. Also, the temperature difference (T4 - T6) was 32°C.

The obtained radiation-curable resin composition for shape-replication, the poly(ethylene terephthalate) film A4300, and an applicator were previously heated up to 95°C. Then, on the hotplate whose temperature was controlled to be 95°C, the radiation-curable resin composition for shape-replication was applied on one side of the poly(ethylene terephthalate) film A4300 by using an applicator, thereby obtaining a sheet for shape-replication (S3) in which the layer of the radiation-curable resin composition for shape-replication with a thickness of 200 µm was laminated on one side of the sheet-type resin substrate.

The obtained sheet for shape-replication (S3) was heated up to 55°C, and passed between a pressurizing roll and a roll-shape-replicated mold, on which grooves of a cylindrical lens pattern with a depth of 70 µm and a pitch of 145 µm were formed, so as to shape-replicate with pressing. Then, the sheet was irradiated by ultraviolet rays with 1000 mJ/cm² from a UV lamp, thereby obtaining the shape-replicated sheet (Sc3), in which the pattern of the mold was replicated to the layer of the radiation-curable resin composition for shape-replication.

The obtained shape-replicated sheet (Sc3) was not damaged during mold-releasing and other treatments and was excellent in a mechanical property. When the shape was measured by using a laser microscope, it was confirmed that the cylindrical lens pattern with a height of 63 µm corresponding to the depth of the cylindrical lens pattern was precisely replicated. Herein, the obtained shape-replicated sheet (Sc3) is highly transparent and excellent in adhesiveness between the cured layer of the radiation-curable resin composition for shape-replication and a poly(ethylene terephthalate) film.

### (Example 4)

To a separable flask, 42 parts of the polyester resin (R1) obtained in Example 1, 51 parts of UNIDIC V-4260, 3 parts of KAYARAD DPHA, 4 parts of IRGACURE 651, and 4 parts of polyether-modified polydimethylsiloxane (SILWET FZ-2164 produced by Toray Dow Corning Silicone Co., Ltd.) were added, stirred and heated at 110°C, and then defoamed by depressurizing, thereby obtaining a uniform radiation-curable resin composition for shape-replication. The temperature (T6), at which a complex viscosity (η*) of the obtained radiation-curable resin composition for shape-replication at a frequency of 1 Hz is 1x10⁶ dPa·s, is 9°C, the temperature (T5), at which a complex viscosity (η*) at a frequency of 1 Hz is 1x10⁵ dPa·s, was 21 °C, and the temperature (T4), at which a complex viscosity (η*) of the components excluding any solvent at a frequency of 1 Hz is 1x10⁴ dPa·s, was 32°C. Also, the temperature difference (T4 - T6) was 23°C.

A sheet for shape-replication (S4) was produced in the same manner as in Example 1 except for using the obtained radiation-curable resin composition for shape-replication.

The obtained sheet for shape-replication (S4) was brought into contact with a flat mold in which rectangular grooves with a bottom width of 93 µm, a top width of 103 µm, and a depth of 40 µm were parallel formed at a spacing of 47 µm, and then the sheet for shape-replication was shape-replicated by pressurizing at a pressure of 98 kPa for 2 seconds. Subsequently, the sheet was separated from the mold, and the pattern of the mold was replicated to the radiation-curable resin composition on exposure to ultraviolet rays with 1000 mJ/cm² from a UV lamp, thereby obtaining a shape-replicated sheet (Sc4).

In the obtained shape-replicated sheet (Sc4), the resin layer became nonuniform due to the pressure during replicating the mold, and therefore, a shape-replicated shape was slightly nonuniform. However, the obtained shape-replicated sheet (Sc4) was not damaged during mold-releasing and other treatments and was excellent in a mechanical property. When this shape was measured by using a laser microscope, the average flat part width at the top part of rectangular shape corresponding to the bottom part (width: 93 µm) of the rectangular groove was 90 µm or more, and it was confirmed that the shape of the mold was precisely replicated.

### (Example 5)

224 g of the propylene glycol, 432 g of cyclohexane dimethanol, 33 g of EPICLON 830 (bisphenol F type epoxy resin produced by Dainippon Ink and Chemicals, Inc.), 45g of CARDURA E10 (product of Shell Japan Ltd., neodecanoic acid glycidyl ester), 996 g of isophthalic acid, and 1.0 g of dibutyl tin oxide were mixed, gradually heated in a nitrogen flow, and then reacted at 245°C, for 18 hours, thereby obtaining a polyester resin (R2) with a number average molecular weight (Mn) of 6,200 and a softening point of 186°C.

In a separable flask, 85 parts of the obtained polyester resin (R2), 8 parts of UNIDIC V-5500, 3 parts of KAYARAD DPHA, and 4 parts of IRGACURE 651 were dissolved in 100 parts of ethyl acetate, and then defoamed by depressurizing, thereby obtaining a uniform radiation-curable resin composition for shape-replication. The temperature (T6), at which a complex viscosity (η*) of the obtained radiation-curable resin composition for shape-replication at a frequency of 1 Hz is 1x10⁶ dPa·s, is 95°C, the temperature (T5), at which a complex viscosity (η*) at a frequency of 1 Hz is 1x10⁵ dPa·s, was 113°C, and the temperature (T4), at which a complex viscosity (η*) of the components excluding any solvent at a frequency of 1 Hz is 1x10⁴ dPa·s, was 133°C. Also, the temperature difference (T4 - T6) was 38°C.

A sheet for shape-replication (S5) was produced in the same manner as in Example 1 except for using the obtained radiation-curable resin composition for shape-replication.

A shape-replicated sheet (Sc5) was produced by shape-replicating and irradiating ultraviolet rays in the same manner as in Example 1 except for using the obtained sheet for shape-replication (S5). The obtained shape-replicated sheet (Sc5) was not damaged during mold-releasing and other treatments and was excellent in a mechanical property. When this shape was measured by using a laser microscope, the flat part width at the top part of rectangular shape corresponding to the bottom part (width: 93 µm) of the rectangular groove was 80 µm or more, and it was confirmed that the shape of the mold was precisely replicated.

### (Comparative example 1)

In a separable flask, 65 parts of an acrylic resin (FINEDIC A-251 produced by Dainippon Ink and Chemicals, Inc., a number average molecular weight (Mn): 7,300), 28 parts of urethane acrylate oligomer (UNIDIC V-4260 produced by Dainippon Ink and Chemicals, Inc), 3 parts of KAYARAD DPHA, and 4 parts of IRGACURE 651 were dissolved in 50 parts of ethyl acetate, and then defoamed by depressurizing, thereby obtaining a uniform radiation-curable resin composition for comparison. The temperature (T6), at which a complex viscosity (η*) of the obtained radiation-curable resin composition for shape-replication at a frequency of 1 Hz was 1x10⁶ dPa·s, is 52°C, the temperature (T5), at which a complex viscosity (η*) at a frequency of 1 Hz is 1x10⁵ dPa·s, was 70°C, and the temperature (T4), at which a complex viscosity (η*) of the components excluding any solvent at a frequency of 1 Hz is 1x10⁴ dPa·s, was 85°C. Also, the temperature difference (T4 - T6) was 33°C.

A sheet for shape-replication (S 1') was produced in the same manner as in Example 1 except for using the obtained radiation-curable resin composition for comparison.

A shape-replicated sheet (Sc1') was produced by shape-replicating and irradiating ultraviolet rays in the same manner as in Example 1 except for using the obtained sheet for shape-replication (S 1') and heating each of the sheet for shape-replication and the mold before shape-replicating.

The cured resin layer of the obtained shape-replicated sheet (Sc1') was very brittle, and it was peeled from the sheet-type resin substrate made of poly(ethylene terephthalate) after mold-releasing, and broken immediately.

### (Comparative example 2)

In a separable flask of 2 L, 65 parts of U-polymer (a polyarylate resin produced by Unitika Ltd., a number average molecular weight (Mn): 16,000), 3 parts of UNIDIC V-4260, 3 parts of KAYARAD DPHA, and 4 parts of IRGACURE 651 were dissolved in 400 parts of ethyl acetate, and dissolved under reflux. However, these were not dissolved uniformly so as not to be able to produce a radiation-curable resin composition for shape-replication. Therefore, further treatment for producing a sheet for shape-replication was abandoned.

### (Comparative example 3)

The radiation-curable resin composition for shape-replication was obtained in the same manner as in Example 1 except for using 37 parts of the obtained polyester resin (R1) and 56 parts of UNIDIC V-4260. The temperature (T6), at which a complex viscosity (η*) of the obtained radiation-curable resin composition for shape-replication at a frequency of 1 Hz is 1x10⁶ dPa·s, was 3°C, the temperature (T5), at which a complex viscosity (η*) at a frequency of 1 Hz is 1x10⁵ dPa·s, was 14°C, and the temperature (T4), at which a complex viscosity (η*) of the components excluding any solvent at a frequency of 1 Hz is 1x10⁴ dPa·s, was 26°C. Also, the temperature difference (T4 - T6) was 23°C.

A sheet for shape-replication (S3') was produced in the same manner as in Example 1 except for using the obtained radiation-curable resin composition for shape-replication.

An obtained sheet for shape-replication (S3') was brought into contact with a flat mold in which rectangular grooves with a bottom width of 93 µm, a top width of 103 µm, and a depth of 40 µm were parallel formed at a spacing of 47 µm, and then the sheet for shape-replication was shape-replicated with pressing at a pressure of 98 kPa for 2 seconds. Subsequently, the sheet was separated from the mold, and the pattern of the mold was replicated to the radiation-curable resin composition on exposure to ultraviolet rays with 1000 mJ/cm² from a UV lamp, thereby obtaining the shape-replicated sheet (Sc3').

In the obtained shape-replicated sheet (Sc3'), the resin layer of the sheet for shape-replication partially flowed out from the sheet-type resin substrate, and the sheet-type resin substrate and the mold were touched. Therefore, a shape-replicated material with a favorable shape-replicating pattern could not be obtained.

### (Comparative example 4)

In a separable flask, 93 parts of an polyester resin (R2), 3 parts of KAYARAD DPHA, and 4 parts of IRGACURE 651 were dissolved in 50 parts of ethyl acetate, and then defoamed by depressurizing, thereby obtaining the uniform radiation-curable resin composition for comparison. The temperature (T6), at which a complex viscosity (η*) of the obtained radiation-curable resin composition for shape-replication at a frequency of 1 Hz is 1x10⁶ dPa·s, was 110°C. The temperature (T5), at which a complex viscosity (η*) at a frequency of 1 Hz is 1x105 dPa·s, and the temperature (T4), at which a complex viscosity (η*) of the components excluding any solvent at a frequency of 1 Hz is 1x10⁴ dPa·s, could not be measured because the resin composition was gelated during the measurement.

On one side of a poly(ethylene terephthalate) film with a thickness of 100 µm, the obtained radiation-curable resin composition for shape-replication was applied and dried 3 times by using an applicator, thereby obtaining a sheet for shape-replication (S4') in which the radiation-curable resin composition for shape-replication layer with a thickness of 100 µm was laminated on one side of the sheet-type resin substrate.

Each of the obtained sheet for shape-replication (S4') and a flat mold, in which rectangular grooves with a bottom width of 93 µm, a top width of 103 µm, and a depth of 40 µm were parallel formed at a spacing of 47 µm, was heated up to 120°C (this is the limit temperature at which the used poly(ethylene terephthalate) film was not thermally deformed.), and the sheet for shape-replication was brought into contact with the mold such that the layer of the radiation-curable resin composition for shape-replication was on the side of the mold, and then the sheet for shape-replication was shape-replicated by pressurizing at a pressure of 98 kPa for 2 seconds. Subsequently, the sheet was separated from the mold after cooling down to 40°C, and the pattern of the mold was replicated to the radiation-curable resin composition on exposure to ultraviolet rays with 1000 mJ/cm² from a UV lamp, thereby obtaining the shape-replicated sheet (Sc4').

The obtained shape-replicated sheet (Sc4') had an ambiguous shape, and was useless from a practical viewpoint.

### INDUSTRIAL APPLICABILITY

A radiation-curable resin composition for shape-replication of the present invention is excellent in a mechanical property of a cured material. In addition, there is the case where it is possible to flow-cast the composition on a sheet-type resin substrate by appropriately heating it without any solvent. In the case of preparing a solution using a solvent, it is possible to dissolve the composition without using a solvent with strong solubility. Also, since the solution requires a small amount of solvent, foams hardly occur in the case of removing the solvent by evaporation after the solution has been flow-cast on a sheet-shape-replicated resin material. In addition, it is easy to improve a shape-replicating property by heating, and the balance of a shape-replicating property and a mechanical property of a cured material is favorable. Also, it is easy to obtain a cured material which is excellent in a mechanical property and on which a shape of a mold such as a lens pattern is precisely replicated. Accordingly, the present invention is industrially useful.

## Claims

1. A radiation-curable resin composition for shape-replication comprising:
a polyester resin (R) whose number average molecular weight (Mn) is 1,000 to 8,000; and
a polymerizable vinyl compound (V), wherein
a temperature (T4), at which a complex viscosity (η*) of components excluding any solvent at a frequency of 1 Hz is 1x10⁴ dPa·s, is 30°C or higher, and
a temperature (T6), at which a complex viscosity (η*) at a frequency of 1 Hz is 1x10⁶ dPa·s, is 100°C or lower.

2. A radiation-curable resin composition for shape-replication according to claim 1, wherein
a temperature (T5), at which the complex viscosity (η*) at a frequency of 1 Hz is 1x10⁵ dPa·s, is 40°C to 80°C, and
the temperature difference (T4 - T6) between the temperature (T4) and the temperature (T6) is 20°C or higher.

3. A radiation-curable resin composition for shape-replication according to claim 2, wherein the polyester resin (R) contains an unsaturated double bond.

4. A radiation-curable resin composition for shape-replication according to claim 3, wherein
the polyester resin (R) is obtained by using a polycarboxylic acid component and a polyol component as essential raw materials, and
a maleic acid and/or fumaric acid are used as a part or all of the polycarboxylic acid component.

5. A radiation-curable resin composition for shape-replication according to claim 3, wherein
the polyester resin (R) is obtained by using a polycarboxylic acid component and a polyol component as essential raw materials, and
bisphenols and/or their alkylene oxide adducts are used as a part or all of the polyol component.

6. A radiation-curable resin composition for shape-replication according to any one of claims 1 to 5, wherein the polymerizable vinyl compound (V) is a (meth)acrylic compound containing 2 to 6 unsaturated double bonds.

7. A radiation-curable resin composition for shape-replication according to any one of claims 1 to 5, wherein the polyester resin (R) has a number average molecular weight (Mn) of 1,500 to 5,000.

8. A radiation-curable resin composition for shape-replication according to claim 7, wherein the polymerizable vinyl compound (V) is a (meth)acrylic compound containing 2 to 6 unsaturated double bonds.

9. A radiation-curable resin composition for shape-replication according to any one of claims 1 to 5, wherein a weight ratio (R/V) of the polyester resin (R) and the polymerizable vinyl compound (V) is 40/60 to 90/10.

10. A radiation-curable resin composition for shape-replication according to claim 1, further comprising a polyether-modified and/or polyester-modified silicone compounds.

11. A radiation-curable resin composition for shape-replication according to claim 10, wherein the content of the polyether-modified and/or polyester-modified silicone compounds in the components excluding any solvent is 1 to 15 wt%.

12. A radiation-curable resin composition for shape-replication according to claim 11, wherein the polyether-modified and/or polyester-modified silicone compounds (S) is a silicone compound containing a (meth)acryloyl group.

13. A radiation-curable resin composition for shape-replication according to any one of claims 1 to 5, further comprising a photoinitiator.

14. A radiation-curable resin composition for shape-replication according to claim 1, wherein the temperature (T4) is 55°C or higher, and the temperature (T6) is 60°C or lower.

15. A sheet for shape-replication, wherein a radiation-curable resin composition for shape-replication according to claim 1 is laminated on one side or both sides of a sheet-type resin substrate.

16. A sheet for shape-replication according to claim 15, wherein the sheet-type resin substrate comprises a poly(ethylene terephthalate) resin.

17. A shape-replicated material produced by shape-replicating a sheet for shape-replication according to claim 15 or 16 and curing the sheet with irradiation.

## Patentansprüche

1. Durch Strahlung härtbare Harzzusammensetzung zur Formreproduktion, umfassend: ein Polyesterharz (R), dessen zahlenmittleres Molekulargewicht (Mn) 1.000 bis 8.000 ist, und
eine polymerisierbare Vinylverbindung (V), wobei
eine Temperatur (T4), bei der eine komplexe Viskosität (η*) von Komponenten, nicht inbegriffen ein Lösungsmittel, bei einer Frequenz von 1 Hz 1X10⁴ dPa·s, ist, 30°C oder höher ist und
eine Temperatur (T6), bei der eine komplexe Viskosität (η*) bei einer Frequenz von 1 Hz 1X10⁶ dPa·s ist, 100°C oder niedriger ist.

2. Durch Strahlung härtbare Harzzusammensetzung zur Formreproduktion gemäß Anspruch 1, wobei
eine Temperatur (T5), bei der die komplexe Viskosität (η*) bei einer Frequenz von 1 Hz 1x10⁵ dPa·s ist, 40°C bis 80°C ist und
die Temperaturdifferenz (T4-T6) zwischen der Temperatur (T₄) und der Temperatur (T6) 20°C oder höher ist.

3. Durch Strahlung härtbare Harzzusammensetzung zur Formreproduktion gemäß Anspruch 2, wobei das Polyesterharz (R) eine ungesättigte Doppelbindung enthält.

4. Durch Strahlung härtbare Harzzusammensetzung zur Formreproduktion gemäß Anspruch 3, wobei
das Polyesterharz (R) durch Verwendung einer Polycarbonsäure-Komponente und einer Polyol-Komponente als essentielle Ausgangsmaterialien erhalten wird und
eine Maleinsäure und/oder Fumarsäure als ein Teil oder das Gesamte der Polycarbonsäure-Komponente verwendet werden/wird.

5. Durch Strahlung härtbare Harzzusammensetzung zur Formreproduktion gemäß Anspruch 3, wobei
das Polyesterharz (R) durch Verwendung einer Polycarbonsäure-Komponente und einer Polyol-Komponente als essentielle Ausgangsmaterialien erhalten wird und
Bisphenole und/oder ihre Alkylenoxid-Addukte als ein Teil oder das Gesamte der Polyol-Komponente verwendet werden.

6. Durch Strahlung härtbare Harzzusammensetzung zur Formreproduktion gemäß einem der Ansprüche 1 bis 5, wobei die polymerisierbare Vinylverbindung (V) eine (Meth)acrylverbindung ist, die 2 bis 6 ungesättigte Doppelbindungen enthält.

7. Durch Strahlung härtbare Harzzusammensetzung zur Formreproduktion gemäß einem der Ansprüche 1 bis 5, wobei das Polyesterharz (R) ein zahlenmittleres Molekulargewicht (Mn) von 1.500 bis 5.000 hat.

8. Durch Strahlung härtbare Harzzusammensetzung zur Formreproduktion gemäß Anspruch 7, wobei die polymerisierbare Vinylverbindung (V) eine (Meth)acrylverbindung ist, die 2 bis 6 ungesättigte Doppelbindungen enthält.

9. Durch Strahlung härtbare Harzzusammensetzung zur Formreproduktion gemäß einem der Ansprüche 1 bis 5, wobei das Gewichtsverhältnis (R/V) des Polyesterharzes (R) und der polymerisierbaren Vinylverbindung (V) 40/60 bis 90/10 ist.

10. Durch Strahlung härtbare Harzzusammensetzung zur Formreproduktion gemäß Anspruch 1, die außerdem eine Polyethermodifizierte und/oder Polyester-modifizierte Silikonverbindung umfasst.

11. Durch Strahlung härtbare Harzzusammensetzung zur Formreproduktion gemäß Anspruch 10, wobei der Gehalt der Polyethermodifizierten und/oder Polyester-modifizierten Silikonverbindung in den Komponenten, nicht inbegriffen ein Lösungsmittel, 1 bis 15 Gew.-% ist.

12. Durch Strahlung härtbare Harzzusammensetzung zur Formreproduktion gemäß Anspruch 11, wobei die Polyethermodifizierte und/oder Polyester-modifizierte Silikonverbindung (S) eine Silikonverbindung ist, die eine (Meth)acrylolgruppe enthält.

13. Durch Strahlung härtbare Harzzusammensetzung zur Formreproduktion gemäß einem der Ansprüche 1 bis 5, die außerdem einen Photoinitiator umfasst.

14. Durch Strahlung härtbare Harzzusammensetzung zur Formreproduktion gemäß Anspruch 1, wobei die Temperatur (T4) 55°C oder höher ist und die Temperatur (T6) 60°C oder niedriger ist.

15. Folie zur Formreproduktion, wobei eine durch Strahlung härtbare Harzzusammensetzung zur Formreproduktion gemäß Anspruch 1 auf eine Seite oder auf beide Seiten eines Harzsubstrats vom Folientyp laminiert ist.

16. Folie zur Formreproduktion gemäß Anspruch 15, wobei das Harzsubstrat vom Folientyp ein Poly(ethylenterephthalat)-Harz umfasst.

17. Formreproduziertes Material, produziert durch Formreproduzieren einer Folie zur Formreproduktion gemäß Anspruch 15 oder 16 und Härten der Folie mit Bestrahlung.

## Revendications

1. Composition de résine durcissable par rayonnement pour la reproduction de forme comprenant:
- une résine de polyester (R) ayant un poids moléculaire moyen en nombre (Mn) de 1000 à 8000 et
- un composé vinyle polymérisable (V),
dans laquelle une température (T4) où la viscosité complexe (η*) des composants à l'exception de solvant à une fréquence de 1 Hz est 1X10⁴ dPa·s, est supérieure ou égale à 30°C et
- une température (T6) où la viscosité complexe (η*) à une fréquence de 1Hz est 1X10⁴ dPa·s, est inférieure ou égale à 100°C.

2. Composition de résine durcissable par rayonnement pour la reproduction de forme, dans laquelle
une température (T5) où la viscosité complexe (η*) à une fréquence de 1Hz est 1X10⁴dPais, est de 40°C à 80°C, et la différence de température (T4-T6) entre la température (T4) et la température (T6) est supérieure ou égale à 20°C.

3. Composition de résine durcissable par rayonnement pour la reproduction de forme selon la revendication 2, dans laquelle la résine de polyester (R) contient une liaison double insaturée.

4. Composition de résine durcissable par rayonnement pour la reproduction de forme selon la revendication 3, dans laquelle la résine de polyester (R) est obtenue en utilisant un composant d'acide polycarboxylique et un composant de polyol en tant que produits de départ essentiels et
un acide maléique et/ou un acide fumarique sont utilisés comme une partie où l'ensemble du composant d'acide polycarboxylique.

5. Composition de résine durcissable par rayonnement pour la reproduction de forme selon la revendication 3, dans laquelle la résine de polyester (R) est obtenue en utilisant un composant d'acide polycarboxylique et un composant de polyol en tant que produits de départ essentiels et
des bisphénols et/ou leurs adducts d'oxyde d'alkylène sont utilisés comme une partie où l'ensemble du composant de polyol.

6. Composition de résine durcissable par rayonnement pour la reproduction de forme selon l'une quelconque des revendications 1 à 5, dans laquelle le composé vinyle polymérisable (V) est un composé (méth)acrylique contenant de 2 à 6 liaisons doubles insaturées.

7. Composition de résine durcissable par rayonnement pour la reproduction de forme selon l'une quelconque des revendications 1 à 5, dans laquelle la résine de polyester (R) a un poids moléculaire moyen en nombre(Mn) de 1500 à 5000.

8. Composition de résine durcissable par rayonnement pour la reproduction de forme selon la revendication 7, dans laquelle le composé vinyle polymérisable (V) est un composé (méth)acrylique contenant de 2 à 6 liaisons doubles insaturées.

9. Composition de résine durcissable par rayonnement pour la reproduction de forme selon l'une quelconque des revendications 1 à 5, dans laquelle le rapport pondéral (R/V) de la résine de polyester (R) et du composé vinyle polymérisable (V) est de 40/60 à 90/10.

10. Composition de résine durcissable par rayonnement pour la reproduction de forme selon la revendication 1 comprenant en outre des composés modifiés par un polyéther et/ou par un polyester.

11. Composition de résine durcissable par rayonnement pour la reproduction de forme selon la revendication 10, dans laquelle la teneur en composé modifié par un polyéther et/ou par un polyester et dans les composants à l'exception d'un solvant de 1 à 15% en poids.

12. Composition de résine durcissable par rayonnement pour la reproduction de forme selon la revendication 11, dans laquelle les composés de silicone modifiés par polyéther et/ou polyester (S) sont un composé de silicone contenant un groupe (méth)acryloyle.

13. Composition de résine durcissable par rayonnement pour la reproduction de forme selon l'une quelconque des revendications 1 à 5 comprenant en outre un photoinitiateur.

14. Composition de résine durcissable par rayonnement pour la reproduction de forme selon la revendication 1, dans laquelle la température (T4) est supérieure ou égale à 55°C et la température (T6) est inférieure ou égale à 60°C.

15. Film pour la reproduction de forme, dans lequel une composition de résine durcissable par rayonnement pour la reproduction de forme selon la revendication 1 est laminée sur une surface où les deux phases d'un substrat de résine du type film.

16. Film pour la reproduction de forme selon la revendication 15, dans lequel le substrat de résine du type film comprend une résine de téréphtalate de polyéthylène.

17. Matériau reproduit en forme obtenu par la reproduction de forme d'un film pour la reproduction de forme selon la revendication 15 ou 16 et durcissement du film par rayonnement.
